Europäisches Patentamt

European Patent Office

Office européen des brevets

(19)

(11) Numéro de publication : **0 116 505**
**B1**

(12) # FASCICULE DE BREVET EUROPÉEN

(45) Date de publication du fascicule du brevet :
25.05.88

(21) Numéro de dépôt : 84400243.6

(22) Date de dépôt : 03.02.84

(51) Int. Cl.⁴ : **F 21 V 21/34, B 60 M 1/30,**
**G 09 F 13/28**

(54) Dispositif d'alimentation d'un récepteur électrique à position variable sur une surface.

(30) Priorité : 04.02.83 FR 8301742

(43) Date de publication de la demande :
22.08.84 Bulletin 84/34

(45) Mention de la délivrance du brevet :
25.05.88 Bulletin 88/21

(84) Etats contractants désignés :
AT BE CH DE FR GB IT LI LU NL SE

(56) Documents cités :
AU-B- 39 761
DE-A- 1 936 991
FR-A- 1 097 274
FR-A- 1 103 335
FR-A- 1 481 706
FR-A- 2 103 111
GB-A- 925 609
US-A- 3 522 474
US-A- 3 610 933
US-A- 4 134 132

(73) Titulaire : **Société SCIDEPA**
**rue de la Croix**
**F-21690 Verrey-sous-Salmaise (FR)**

(72) Inventeur : **Andriessen, Johannes**
**Salmaise**
**F-21690 Verrey-sous-Salmaise (FR)**
Inventeur : **Gaillard, Daniel**
**Tanay Lot Les Crays l'Huissier**
**F-21310 Mirebeau-sur-Beze (FR)**

(74) Mandataire : **Bruder, Michel**
**10 rue de la Pépinière**
**F-75008 Paris (FR)**

EP 0 116 505 B1

## Description

La présente invention concerne un dispositif d'alimentation d'un récepteur électrique à position variable sur une surface, applicable notamment à l'alimentation d'un appareil d'éclairage mobile ou à la réception d'un signal électrique quelconque par un appareil.

Les appareils récepteurs et utilisateurs d'énergie électrique, tels que, par exemple, lampes d'éclairage, moteurs, etc, sont généralement raccordés, à proximité de leur lieu d'emploi, au réseau à courant alternatif et une telle distribution de l'énergie électrique impose certaines contraintes du fait du nécessaire raccordement du récepteur aux prises électriques.

On connaît également des dispositifs d'alimentation de moteurs électriques de véhicules se déplaçant le long d'un trajet comportant des zones conductrices et en particulier de véhicules circulant dans les parcs d'attraction. Un tel dispositif d'alimentation est par exemple décrit dans le brevet FR-A-1 097 274. Ce dispositif d'alimentation comprend, au sol, un réseau de bandes conductrices parallèles, espacées les unes des autres et portées alternativement à des potentiels différents. De son côté le véhicule porte un certain nombre de balais ou palpeurs frottant sur les bandes conductrices et disposés de telle façon qu'au moins deux de ces balais soient toujours en contact avec deux bandes conductrices à des potentiels différents, de manière à pouvoir alimenter en courant électrique le moteur du véhicule.

On connaît également d'autres dispositifs d'alimentation électrique de ce type tels que décrits dans les brevets FR-A-1 103 335 et AU-B-39 761. Le dispositif suivant le brevet FR-A-1 103 335 comprend, comme palpeurs, deux pointes pouvant venir en contact, par leurs extrémités avec deux rubans conducteurs de polarités opposées, parallèles l'un à l'autre et à proximité immédiate l'un de l'autre. Le brevet AU-B-39 761 décrit un dispositif à plusieurs palpeurs glissant sur des rubans conducteurs de polarités alternées. Dans ce dispositif le nombre de palpeurs est au moins égal à quatre.

La présente invention vise une application particulière d'un tel réseau de bandes conductrices parallèles pour l'alimentation électrique, en toute sécurité, d'appareils fixes mais dont la position peut être choisie à volonté sur une surface quelconque.

A cet effet ce dispositif d'alimentation d'un récepteur électrique à position variable sur une surface comprenant, sur ladite surface, un réseau de bandes parallèles en un matériau conducteur de l'électricité, de même largeur et espacées les unes des autres, ces bandes étant imbriquées alternativement les unes dans les autres en formant deux ensembles à savoir un premier ensemble de bandes de rangs pairs connecté à un pôle d'une source de courant électrique, et un second ensemble de bandes de rangs impairs connecté à l'autre pôle de la source de courant, un capteur de courant à position variable portant au moins deux palpeurs susceptibles de venir en contact avec les bandes conductrices, et un circuit de commutation pour l'alimentation du récepteur, ce circuit ayant plusieurs entrées connectées respectivement aux palpeurs de courant et une sortie reliée au récepteur pour permettre l'alimentation du récepteur lorsqu'au moins deux des palpeurs de courant viennent en contact avec deux bandes conductrices appartenant respectivement aux premier et second ensembles de bandes reliés aux deux pôles de la source de courant électrique, est caractérisé en ce que le réseau de bandes parallèles conductrices est recouvert d'une couche de matière isolante, les palpeurs de courant sont réalisés sous la forme d'aiguilles-contact métalliques de même longueur traversant la couche en matière isolante formant le revêtement supérieur appliqué sur les bandes conductrices, les palpeurs sont disposés aux sommets d'un triangle équilatéral dont la hauteur est égale à l'entr'axe des bandes conductrices, c'est-à-dire sensiblement égale à la largeur de ces bandes.

La source de courant électrique alimentant les deux ensembles de bandes conductrices peut fournir un courant continu ou alternatif.

Le dispositif suivant l'invention offre l'avantage qu'il permet d'assurer une alimentation parfaite quelle que soit la position du support formant capteur de courant par rapport aux bandes conductrices c'est-à-dire aussi bien en abscisse qu'en ordonnée et en position angulaire. Il permet d'optimiser dans de fortes proportions le taux de fonctionnement du dispositif par rapport aux probabilités très faibles de voir les aiguilles-contact s'engager dans les zones isolantes de très faible largeur prévues entre les bandes conductrices.

On décrira ci-après, à titre d'exemples non limitatifs, diverses formes d'exécution de la présente invention, en référence au dessin annexé sur lequel :

La figure 1 est une vue en plan schématique d'un dispositif d'alimentation d'un récepteur électrique suivant l'invention.

La figure 2 est une vue en coupe, à plus grande échelle, faite suivant la ligne II-II de la figure 1.

La figure 3 est un schéma électrique d'une forme d'exécution du circuit de commande dans le cas d'une alimentation en courant alternatif ou redressé ou continu.

La figure 4 est une vue en coupe verticale d'une variante d'exécution dans laquelle le dispositif de distribution d'énergie électrique suivant l'invention est pourvu d'un dispositif de sécurité antiélectrocution.

La figure 5 est un schéma électrique du dispositif de sécurité antiélectrocution.

La figure 6 est une vue en perspective éclatée d'une variante d'exécution utilisée pour l'alimentation électrique d'appliques murales maintenues par attraction magnétique.

La figure 7 est un schéma électrique d'une variante d'exécution du circuit d'alimentation d'appliques murales.

La figure 8 est une vue en plan d'un dispositif suivant l'invention assurant l'alimentation en énergie électrique d'appareils placés dans une pièce et la distribution du courant « son » à ces appareils ou à d'autres appareils.

La figure 8A est une vue en plan schématique d'une variante d'exécution des connecteurs utilisés dans le dispositif de la figure 8.

La figure 9 est une vue en plan d'une variante de réalisation des bandes conductrices assurant la distribution de l'énergie électrique.

La figure 10 est une vue en plan schématique partielle d'une variante d'exécution du capteur de courant à aiguilles-contact.

La figure 11 est une vue en perspective éclatée d'un dispositif de montage d'une aiguille-contact effaçable.

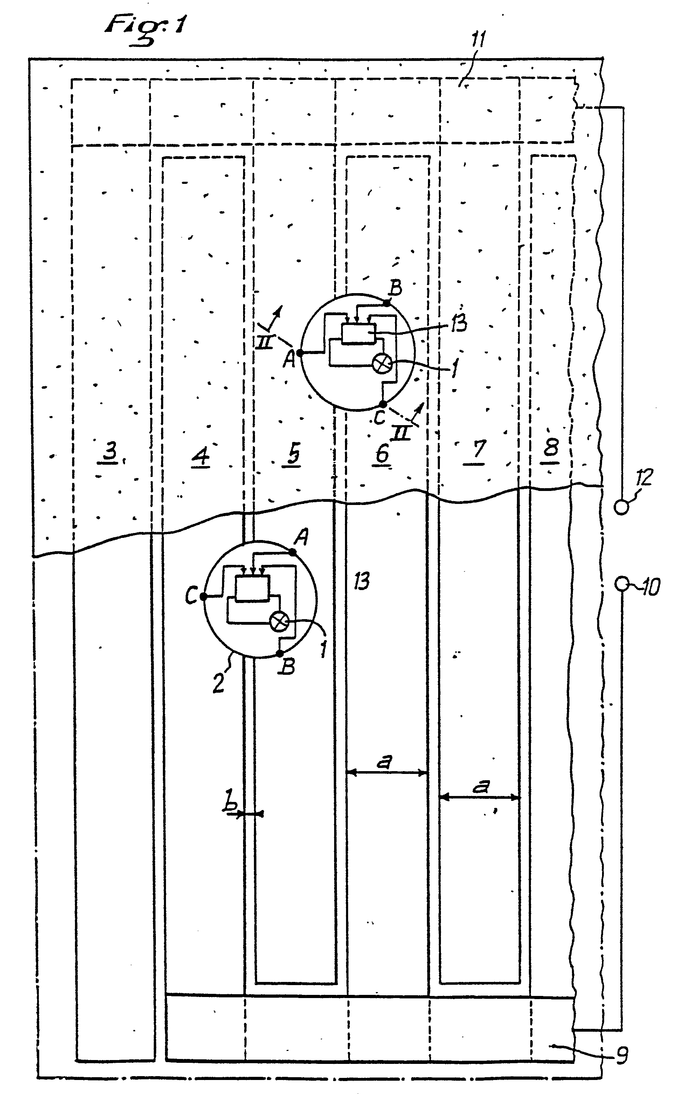

Le dispositif d'alimentation suivant l'invention qui est représenté sur la figure 1 est destiné à assurer l'alimentation d'un récepteur électrique 1 solidaire d'un capteur de courant 2 comprenant un support de forme quelconque, schématisé par un cercle, lequel peut occuper une position variable sur une surface plane. Le récepteur électrique 1 peut être, par exemple, une lampe d'un appareil d'éclairage, tel qu'un lampadaire, placé en un endroit quelconque sur la surface d'appui pour le support 2 formant capteur de courant. L'alimentation du récepteur 1, en l'occurrence de la lampe d'éclairage, est commandée par un circuit de commutation 13 porté par le support 2 formant capteur de courant.

Le dispositif d'alimentation électrique comporte, sur le sol, un réseau de bandes conductrices parallèles, de même largeur a espacées les unes des autres. Ces bandes sont réparties en deux ensembles à savoir un premier ensemble comprenant les bandes 4, 6, 8 etc... de rangs pairs et un second ensemble comprenant les bandes 3, 5, 7 etc... de rangs impairs. Ces bandes peuvent avoir une largeur de 20 cm par exemple. A l'une de leurs extrémités les bandes de rangs pairs 4, 6, 8 du premier ensemble sont raccordées à une bande conductrice transversale commune 9 et qui est elle-même connectée à un pôle 10 d'une source de courant électrique, continu ou alternatif (de tension 24 V par exemple). De la même façon les bandes 3, 5, 7 de rangs impairs du second ensemble sont raccordées, à l'une de leurs extrémités, à une bande conductrice transversale commune 11, qui est connectée à l'autre pôle 12 de la source de courant électrique. Les bandes 4, 6, 8 de rangs pairs et les bandes 3, 5, 7 de rangs impairs sont espacées les unes des autres d'un petit intervalle b qui peut être par exemple de l'ordre de 1 mm. Les bandes de rangs pairs 4, 6, 8 s'arrêtent à une faible distance, de l'ordre de 1 mm, de la bande transversale commune 11 du second ensemble et il en est de même pour les bandes de rangs impairs 3, 5, 7 qui s'arrêtent à faible distance de la bande transversale commune 9 du premier ensemble.

Il est possible d'utiliser l'une des bandes extrêmes, telle que la bande 3, pour faire le retour, vers la source de courant 12, d'un groupe de bandes 3, 5, 7, ainsi que les bandes collectrices transversales 9, 11, avec possibilité de répartir en plusieurs zones indépendantes l'ensemble de la surface, pour une meilleure répartition des intensités électriques.

La fourniture du courant au récepteur 1 est assurée par le capteur de courant comprenant trois palpeurs A, B, C solidaires du support 2 et qui sont disposés aux sommets d'un triangle équilatéral. Ce triangle a une hauteur égale à l'entr'axe des bandes 3-8. Les trois palpeurs de courant A, B, C sont connectés respectivement aux trois entrées d'un circuit de commutation temporisée ou non 13 provoquant l'alimentation du récepteur 1, si deux au moins des trois palpeurs de courant A, B, C se trouvent être mis en contact avec deux des bandes conductrices 3-8 à des potentiels différents. Ceci est illustré schématiquement sur la figure 1 où l'on voit, dans la partie supérieure de celle-ci, que le palpeur A est en contact avec la bande 5 tandis que les palpeurs B et C sont en contact avec la bande 6. Dans la partie médiane de cette figure le palpeur C est en contact avec la bande 4 tandis que les deux autres palpeurs A et B sont en contact avec la bande 5. Dans chacun de ces cas le circuit de commutation 13 commande l'alimentation du récepteur 1.

Le circuit de commutation 13 peut être réalisé de différentes façons et on peut utiliser pour ce circuit des éléments bien connus dans la technique tels que triacs, thyristors, diodes, transistors, commutateurs manuels et mêmes relais.

Suivant l'invention, les bandes conductrices 3-8 sont recouvertes d'une couche de matière isolante 14 constituée, par exemple, par une moquette posée sur le sol. Les palpeurs A, B, C sont par ailleurs constitués par des aiguilles-contact de même longueur traversant le revêtement isolant 14 appliqué sur les bandes conductrices. Il est ainsi possible de placer le support 2 formant capteur de courant en n'importe quel endroit désiré sur le revêtement isolant 14, l'alimentation électrique du récepteur 1 étant alors établie automatiquement par suite de la venue en contact des extrémités des aiguilles-contact A, C avec deux bandes conductrices 5, 6 de polarités différentes.

Dans la variante de réalisation illustrée sur la figure 3, le dispositif d'alimentation est prévu pour une alimentation en courant alternatif ou continu ou redressé. Les trois aiguilles-contact A, B, C sont reliées respectivement aux trois entrées alternatives d'un pont triphasé Graetz désigné dans son ensemble par la référence 15 et qui peut constituer le circuit de commutation 13 de la figure 1. Ce circuit peut comporter des moyens de temporisation 16, de tout type connu, pour provoquer l'alimentation du récepteur 1 un certain temps après que les aiguilles-contact A, B, C ont été mises en contact avec les bandes conductrices 3-8.

Le dispositif décrit en référence à la figure 3 offre l'avantage qu'il permet d'assurer une alimentation parfaite quelle que soit la position du support 2 formant capteur de courant par rapport aux bandes conductrices 5, 6, c'est-à-dire aussi bien an abscisse qu'en ordonnée et en position angulaire.

Comme il a été dit précédemment, le triangle équilatéral des aiguilles-contact A, B, C est réalisé de telle sorte que sa hauteur ou médiane soit égale à l'entr'axe des bandes d'aluminium, c'est-à-dire sensiblement égale à la largeur de ces bandes. Ceci permet d'optimiser dans de fortes proportions le taux de fonctionnement du dispositif par rapport aux probabilités très faibles de voir les aiguilles-contact A, B, C s'engager dans les zones isolantes de très faible largeur prévues entre les bandes conductrices.

Bien que dans la description qui précède, il a été fait mention de l'alimentation de la lampe d'un appareil d'éclairage, tel qu'un lampadaire, il va de soi que l'invention peut s'appliquer également à l'alimentation de n'importe quel récepteur fixe ou déplaçable.

Suivant une variante le dispositif d'alimentation suivant l'invention, pourrait comprendre seulement deux aiguilles-contact ou plus de trois aiguilles-contact disposées suivant une configuration polygonale quelconque telle que carré, pentagone, régulière ou non. Dans le cas d'une disposition régulière, une aiguille-contact additionnelle pourrait être également prévu au centre du polygone.

Par ailleurs, le récepteur électrique 1 n'est pas forcément porté par le support 2 des aiguilles-contact formant capteur de courant et il peut être situé à une certaine distance de ce support.

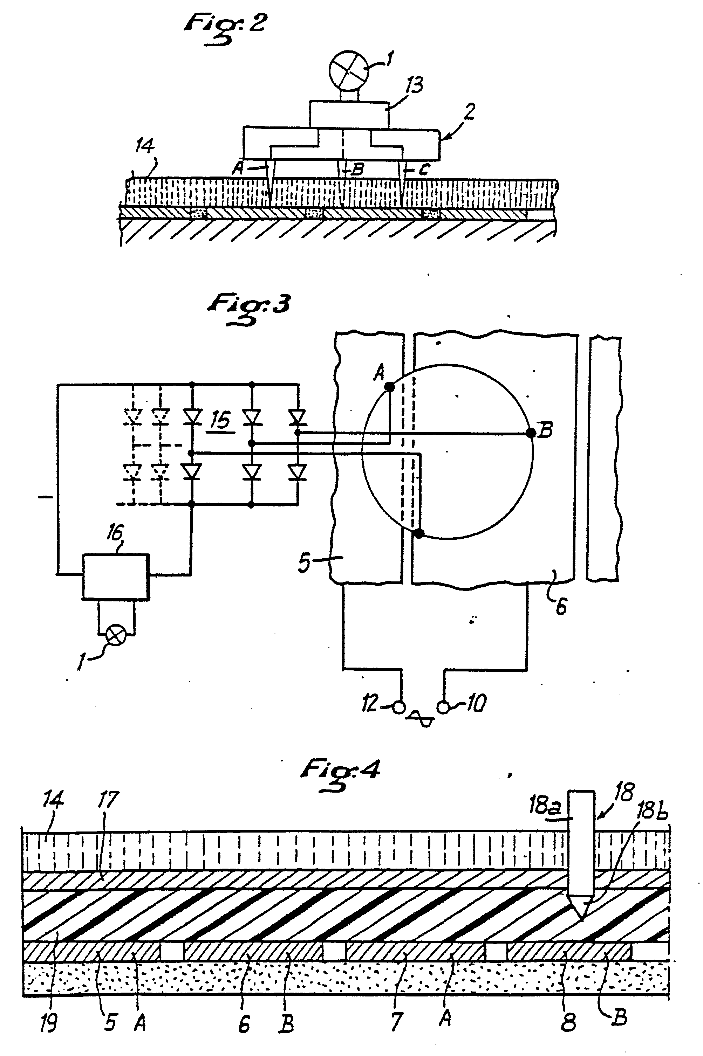

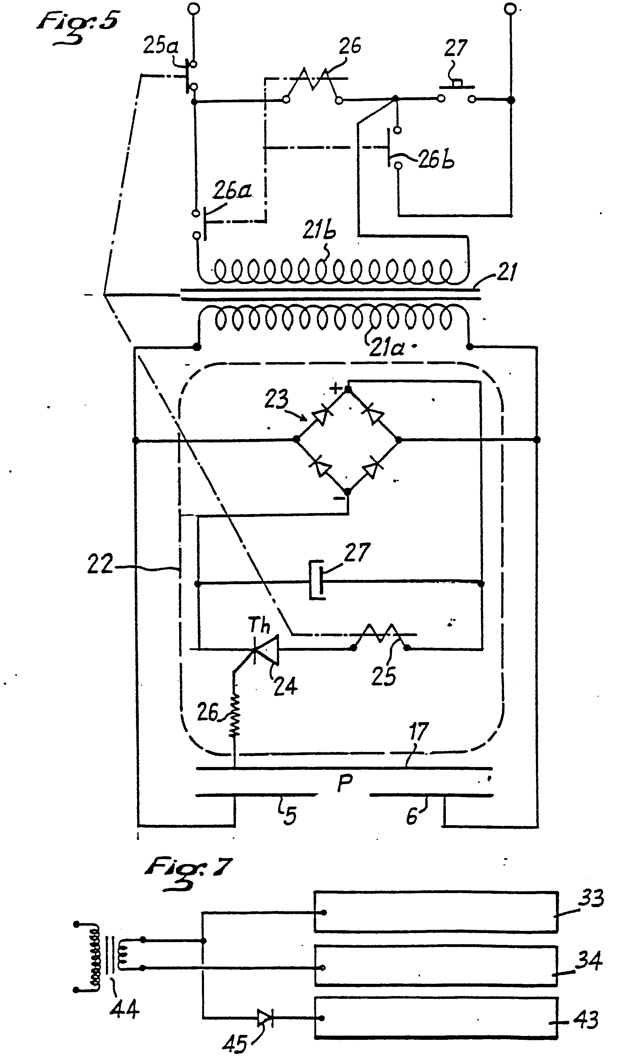

On décrira maintenant, en se référant plus particulièrement aux figures 4 et 5, une forme d'exécution du dispositif de distribution d'énergie électrique en 220 volts, suivant l'invention, au travers d'une moquette, avec un dispositif de sécurité anti-électrocution. Ce dispositif de sécurité comprend une plaque de protection 17 située sous la moquette 14 et qui est bonne conductrice de l'électricité. Cette plaque de protection peut être réalisée, suivant les normes en vigueur, en mousse conductrice ou en tressage métallique ou en aluminium plein ou en tout autre matière similaire. Cette plaque de protection 17 est destinée à être traversée par des aiguilles-contact spéciales 18. Chacune de ces aiguilles-contact 18 est isolée sur toute sa longueur, dans sa partie 18a, à l'exception de sa pointe inférieure 18 b et de sa partie supérieure, dans la zone destinée à raccorder l'aiguille au reste du circuit. Entre la plaque de protection 17 et le plan dans lesquels se trouvent les bandes conductrices 5, 6, 7, 8 est disposé un écran isolant 19, par exemple en mousse de caoutchouc, d'une épaisseur légèrement supérieure à la longueur de la pointe conductrice 18b de l'aiguille-contact 18.

La figure 5 représente le schéma électrique du dispositif de sécurité antiélectrocution. Ce dispositif comporte un transformateur 21 ayant un rapport de transformation égal à 1. L'enroulement secondaire 21a de ce transformateur est connecté, à ses extrémités, respectivement aux deux ensembles de bandes conductrices ayant des polarités inverses, ensembles qui sont représentés par les seules bandes conductrices 5 et 6. Cet enroulement secondaire 21a est également relié à un ensemble détecteur 22 qui comprend un pont redresseur 23 alimentant, entre ses bornes de sortie à courant continu, un thyristor 24 en série avec la bobine d'un relais 25. La gâchette de ce thyristor 24 est reliée, par une résistance 26, à la plaque de protection 17. Cette résistance 26, qui a, par exemple, une valeur de 22 k, est destinée à limiter l'intensité du courant de gâchette en cas de court-circuit franc entre la plaque de protection 17 et les bandes conductrices 5, 6. Un condensateur 27 est en outre branché en parallèle sur le thyristor 24 et la bobine 25 du relais. Ce relais comporte un contact de repos 25a qui est branché en série dans le circuit d'alimentation de l'enroulement primaire 21b du transformateur 21. Le dispositif de sécurité comporte également un relais dont la bobine 26 est branchée en dérivation sur l'enroulement primaire 21b et ce en série avec un interrupteur 27, cet interrupteur 27 commandant l'alimentation électrique des bandes conductrices 5, 6. Le relais 26 comporte deux contacts de travail 26a, 26b qui sont branchés en série avec l'enroulement primaire 21b et qui sont par conséquent fermés lorsqu'on appuie sur l'interrupteur 27.

Le dispositif de sécurité qui vient d'être décrit permet de couper pratiquement instantanément l'alimentation électrique des bandes conductrices 5, 6 en courant alternatif à 220 volts dans le cas d'un passage de courant entre la plaque de protection 17 et l'une quelconque des bandes conductrices 5 et 6. En effet le passage d'un tel courant provoque l'amorçage du thyristor 24, la mise au travail du relais 25 et l'ouverture du contact 25a, ce qui entraîne la coupure de l'alimentation du transformateur 21.

On décrira maintenant, en se référant plus particulièrement aux figures 6 et 7, une variante d'exécution utilisée pour l'alimentation électrique d'appliques murales telles qu'une applique 28 représentée sur la figure 6.

La structure représentée sur la figure 6 et qui est fixée sur une cloison 29 comprend un substrat constitué de deux bandes d'acier doux horizontales 31, 32 et isolées entre elles. Ces deux bandes sont entièrement recouvertes de bandes conductrices respectives 33, 34 par exemple en aluminium, destinées à acheminer l'énergie électrique. L'ensemble de ces bandes 31-34 peut être assemblé et fixé sur la cloison 29 ou sur un plafond, par exemple au moyen de bandes adhésives bifaces. Sur le figure 6 une telle bande adhésive 35 assure la fixation des deux bandes d'acier doux 31, 32 sur la cloison 29 tandis qu'une autre bande adhésive biface 36, disposée entre les bandes d'acier doux 31, 32 et les bandes d'aluminium 33, 34, assure la liaison entre ces bandes. Une troisième bande adhésive biface 37 peut être également disposée entre les deux bandes d'aluminium 33, 34 et un tissu d'ameublement 38 constituant le revêtement externe de la cloison. Par ailleurs l'applique 28 comporte un socle 39 sur la face antérieure duquel est fixée une lampe 41. Sur sa face postérieure le socle 39 porte deux aiguilles-contact A, B qui sont destinées à venir en contact respectivement avec les bandes d'aluminium 33, 34 pour assurer l'alimentation électrique de la lampe 41.

La fixation au mur de l'applique 28 s'effectue par attraction magnétique. A cet effet le socle 39 porte, à l'intérieur, des aimants 42 qui coopèrent avec les bandes d'acier doux 31, 32 pour maintenir plaqué l'ensemble de l'applique 28 contre la cloison 29, par suite de l'attraction magnétique exercée.

On conçoit, d'après la description qui précède, que la mise en place et la fixation de l'applique 28 sont très aisées à réaliser : il suffit en effet de présenter le socle 39 verticalement, et de l'appuyer contre la cloison 29, les aiguilles-contact A, B venant alors en contact des bandes d'aluminium conductrices 33, 34, pour assurer l'alimentation de la lampe 41 et l'applique 28 restant maintenue en position par attraction magnétique.

La figure 7 illustre une variante d'exécution dans laquelle on utilise trois bandes conductrices 33, 34, 43 au lieu des deux bandes d'aluminium 33, 34 prévues dans le dispositif illustré sur la figure 6. Les deux bandes conductrices 33, 34 sont connectées respectivement aux deux extrémités de l'enroulement secondaire d'un transformateur abaisseur 44, pour assurer l'alimentation de ces deux bandes sous une tension de 24 volts, par exemple à partir d'un réseau à 220 volts. Par ailleurs une extrémité de l'enroulement secondaire du transformateur abaisseur 44 est connectée, par l'intermédiaire d'une diode 45, à la troisième bande conductrice 43. Par conséquent si les deux aiguilles contact A, B de l'applique 28 sont mises en contact avec les deux bandes 33, 34, on obtient un éclairage maximal tandis que si les deux pointes A, B sont mises en contact respectivement avec l'une des bandes 33, 34 et avec la troisième bande 43, on obtient un éclairage réduit.

Les appliques utilisées peuvent être électriques ou non. Si elles sont électriques elles peuvent avoir une allure traditionnelle ou revêtir toute configuration (par exemple boîtiers vitraux, boîtiers menus, boîtiers diffuseurs de musique, miroirs, tableaux, etc). Dans les lieux publics, il est possible, en fonction du nombre de boîtiers mis en œuvre, de déclencher une alarme contre le vol de l'une d'elles immédiatement au moment du méfait.

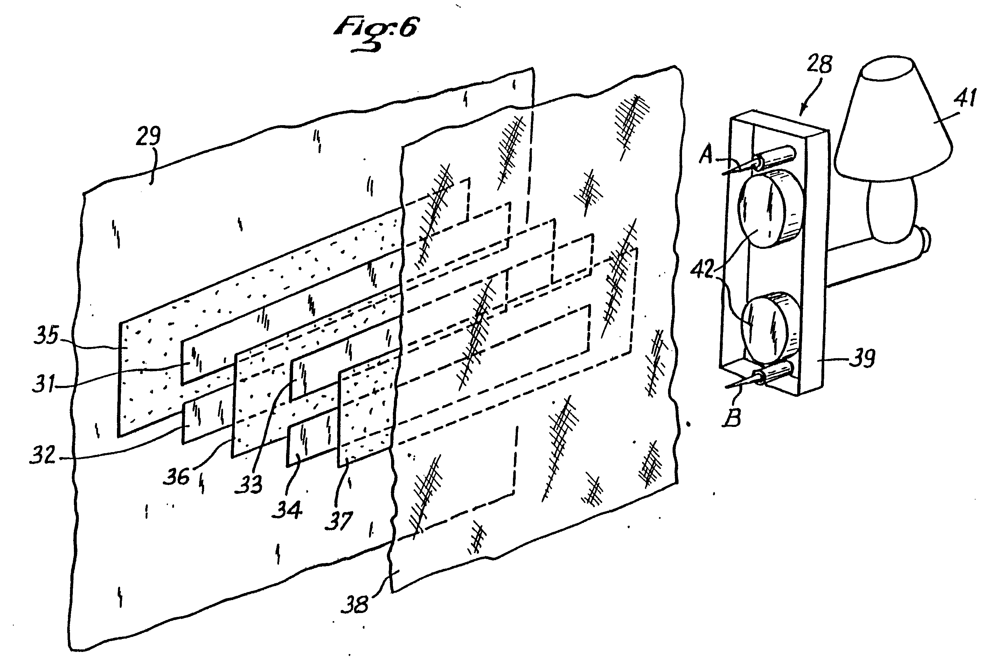

Sur la figure 8 est représentée une application du dispositif suivant l'invention à l'alimentation d'un matériel HI-FI placé dans une pièce et à la distribution du courant « son » en ceinturage de la pièce. L'alimentation des appareils en courant alternatif s'effectue, comme dans les cas précédents, à partir des bandes conductrices 5, 6, 7, 8 placées dans la partie centrale de la pièce, sur le sol. En outre, d'autres bandes conductrices 46, 47, 48, 49 s'étendent tout autour de la pièce, à proximité immédiate des murs, en étant espacées les unes des autres. Les bandes 46, 47 sont prévues pour assurer la distribution du courant « son » du canal gauche tandis que les bandes 48, 49 assurent la distribution du courant « son » du canal droit. Avec ces bandes coopèrent des connecteurs 51, 52, reliés aux appareils devant recevoir les courants son qui sont pourvus chacun de deux aiguilles-contact. Le connecteur 51, associé au canal gauche, porte deux aiguilles-contact 51a, 51b venant respectivement en contact avec les bandes conductrices 46, 47. L'autre connecteur 52, associé au canal droit, porte lui aussi deux aiguilles-contact 52a, 52b venant respectivement en contact avec les bandes 48, 49.

Dans la variante d'exécution représentée sur la figure 8A, les aiguilles-contact 51a, 51b du connecteur 51 sont appliquées respectivement sur les bandes 46, 48 tandis que les aiguilles-contact 52a, 52b du connecteur 52 sont appliquées respectivement sur les bandes 47, 49.

Pour la distribution des courants « son » des deux canaux on pourrait aussi utiliser un seul connecteur pourvu de quatre aiguilles-contact telles que les aiguilles 51a, 51b, 52a, 52b, ces aiguilles étant espacées les unes des autres d'intervalles correspondants aux intervalles entre les bandes conductrices 46-49.

La référence de mise en position de l'ensemble de la structure ainsi que des divers capteurs, peut être la plinthe du mur ou une coloration particulière du revêtement de sol.

Au-delà d'un certain niveau d'énergie, il peut être bon de prévoir, dans les capteurs de courant, un interrupteur s'ouvrant immédiatement, lors de l'enlèvement du capteur de sa surface d'appui, afin que la rupture électrique ne se produise pas entre les aiguilles-contact. Il suffit pour cela de prévoir le corps du capteur proprement dit en deux parties mobiles l'une par rapport à l'autre, une première partie du corps portant les aiguilles-contact reliées à un élément de l'interrupteur tandis que l'autre partie du corps porte l'autre élement de l'interrupteur.

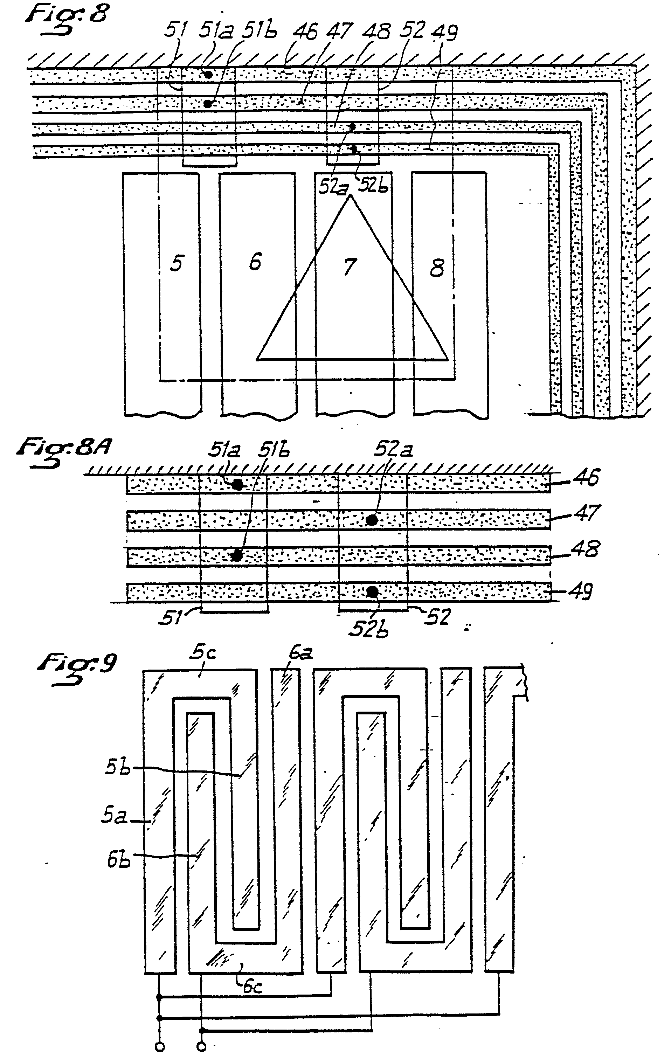

La figure 9 illustre une variante d'exécution du réseau des bandes conductrices dans laquelle chacune des bandes conductrices présente la forme d'un U à deux branches de longueurs inégales. Plus particulièrement l'une des bandes conductrices, d'une première polarité, comprend deux branches 5a, 5b parallèles l'une à l'autre, de longueurs différentes, la branche 5b étant plus courte que la branche 5a, et reliées entre elles par une âme transversale 5c. La bande conductrice de polarité opposée à la précédente comprend également une grande branche longitudinale 6a, une petite branche longitudinale 6b et une âme transversale 6c. Les deux bandes conductrices en forme de U, sont imbriquées l'une dans l'autre, la branche 5b de petite longueur de la première bande conductrice se trouvant s'étendre entre les deux branches 6b, 6a de la seconde bande conductrice et de la même façon la branche 6b de petite longueur de la seconde bande conductrice se trouvant s'étendre entre les deux branches 5a, 5b de la première bande conductrice.

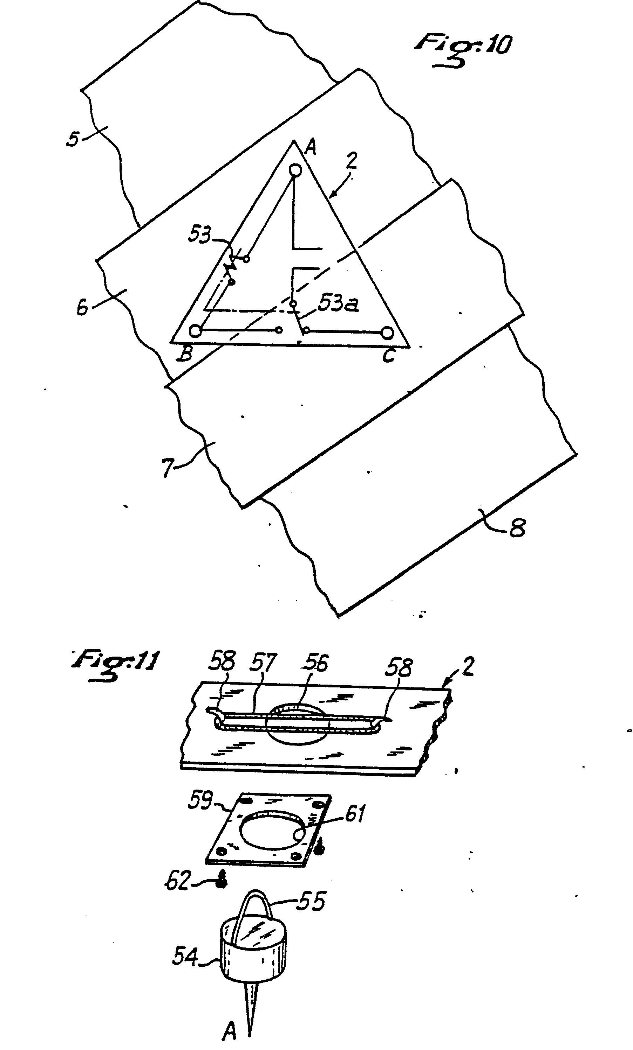

Dans la variante d'exécution illustrée sur la figure 10, le capteur de courant 2 comprend une bobine de relais 53 branchée en série entre deux aiguilles-contact A et B, l'aiguille A étant reliée à une borne d'entrée de la charge. Par ailleurs le relais 53 comporte un contact inverseur 53a dont le commun est relié à l'autre borne d'entrée de la charge et qui est connecté, en position de repos, à la troisième aiguille-contact C et, en position de travail, à l'aiguille-contact B. De ce fait si les aiguilles-contact A et B se trouvent en contact avec une même bande conductrice 6 d'une polarité tandis que seule la troisième aiguille-contact C est en contact avec la bande conductrice 7 de polarité opposée, le relais 53 n'est pas excité, le contact inverseur 53a est au repos et la charge est bien reliée, par l'intermédiaire des deux aiguilles-contact A et C, aux deux bandes conductrices respectives 6, 7. Par contre, si, l'aiguille-contact A restant toujours en contact avec la bande conductrice 6, l'autre aiguille-contact B vient sur la bande conductrice 7 de polarité opposée, le relais 53 est mis au travail, le contact 53a est transféré en position de travail et la charge est alors, là encore, connectée en deux bandes conductrices 6, 7 mais cette fois par les aiguilles-contact A et B. Il est ainsi possible d'alimenter la charge avec la même forme d'onde que celle qui est distribuée par le substrat conducteur, ce qui est particulièrement intéressant en courant alternatif, pour l'alimentation d'un transformateur par exemple.

La figure 11 illustre un dispositif de montage d'une aiguille-contact effaçable lorsque cette aiguille-contact est installée sous des objets lourds, tels que bureaux, tables, etc. afin qu'il n'y ait pas détérioration de la moquette lors du transport dudit mobilier.

Dans ce dispositif de montage l'aiguille-contact effaçable A est solidaire d'une douille 54 à la partie supérieure de laquelle est fixée une anse 55. Par ailleurs le capteur de courant 2 dont seule la partie inférieure est représentée, est percée d'une ouverture 56 à travers laquelle l'anse 55 fait saillie vers le haut. Un caoutchouc 57 ou tout autre organe élastique de rappel similaire, s'étend en travers de l'ouverture 56, au-dessus de la partie inférieure du capteur 2, à laquelle il est accroché par des pattes 58, et il s'étend également à travers l'anse 55 pour retenir l'aiguille-contact A. La liaison électrique avec l'organe de commutation est réalisée au moyen d'une plaque conductrice intercalaire 59 percée, dans sa partie centrale, d'un trou 61 correspondant à l'ouverture 56 du capteur 2. Cette plaque conductrice intercalaire est fixée sous la partie inférieure du capteur 2, au moyen de vis 62.

Le dispositif de montage illustré sur la figure 11 permet d'assurer une excellente pénétration verticale de l'aiguille-contact A dans le revêtement isolant 14 et il permet surtout à l'aiguille-contact de se coucher sans se casser, lorsque le capteur 2 est traîné horizontalement au voisinage du sol. De ce fait l'aiguille-contact A ne peut se casser et on évite, dans un tel cas de traînage, de labourer la moquette. Il suffit ensuite de reposer le capteur 2 verticalement, après l'avoir soulevé, pour obtenir un bon fonctionnement.

Toutes les formes d'exécution de l'invention peuvent être pourvues d'un dispositif de sécurité antiélectrocution, tel que celui illustré sur la figure 5. Dans ce dernier cas, le transformateur 21 pourrait être supprimé et remplacé par un disjoncteur différentiel ou un interrupteur différencié.

Par ailleurs les bandes conductrices ne sont pas nécessairement rectilignes mais elles peuvent avoir toute configuration désirée.

**Revendications**

1. Dispositif d'alimentation d'un récepteur électrique à position variable sur une surface comprenant, sur ladite surface, un réseau de bandes de même largeur et espacées les unes des autres, ces bandes étant imbriquées alternativement les unes dans les autres en formant deux ensembles à savoir un première ensemble de bandes de rangs pairs (4, 6, 8) connecté à un pôle (10) d'une source de courant électrique, et un second ensemble de bandes de rangs impairs (3, 5, 7) connecté à l'autre pôle (12) de la source de courant, un capteur de courant (2) à position variable trois palpeurs (A, B, C) susceptibles de venir en contact avec les bandes conductrices, et un circuit (13) de commutation pour l'alimentation du récepteur, ce circuit (13) ayant plusieurs entrées connectées respectivement aux palpeurs de courant (A, B, C) et une sortie reliée au récepteur pour permettre l'alimentation du récepteur (1) lorsqu'au moins deux des palpeurs de courant (A, B, C) viennent en contact avec deux bandes conductrices appartenant respectivement au premier et second ensembles de bandes reliés aux deux pôles (10, 12) de la source de courant électrique, caractérisé en ce que le réseau de bandes parallèles conductrices (5-8) est recouvert d'une couche de matière isolante (14), les palpeurs de courant (A, B, C) sont réalisés sous la forme d'aiguilles-contact métalliques de même longueur traversant la couche en matière isolante (14) formant le revêtement supérieur appliqué sur les bandes conductrices (5-8) et les palpeurs (A, B, C) sont disposés aux sommets d'un triangle équilatéral dont la hauteur est égale à l'entr'axe des bandes conductrices (3-8), c'est-à-dire sensiblement égale à la largeur de ces bandes.

2. Dispositif suivant la revendication 1 caractérisé en ce que les bandes de rangs pairs (4, 6, 8) du premier ensemble sont raccordées, à l'une de leurs extrémités, à une bande conductrice l'autre pôle (12) de la source de courant électrique, ces bandes de rangs pairs et impairs s'arrêtent à une faible distance des bandes transversales communes (9, 11), l'une des bandes extrêmes (3) peut être utilisée, ainsi que les bandes collectrices transversales (9, 11) pour faire le retour vers la source de courant (12, 10), d'un groupe de bandes (3, 5, 7) et l'ensemble de la surface peut être réparti en plusieurs zones indépendantes pour assurer une meilleure répartition de l'intensité électrique.

3. Dispositif suivant l'une quelconque des revendications précédentes caractérisé en ce que le circuit (13) comprend des moyens de temporisation (16) pour provoquer l'alimentation du récepteur (1) un certain temps après que les palpeurs de courant (A, B, C) sont mis en contact avec les bandes conductrices (3-8).

4. Dispositif suivant l'une quelconque des revendications précédentes caractérisé en ce qu'il comporte un dispositif de sécurité antiélectrocution comprenant une plaque de protection (17) située sous la couche de matière isolante (14) et qui est bonne conductrice de l'électricité, cette plaque de protection étant destinée à être traversée par des aiguilles-contact (18), chacune de ces aiguilles-contact (18) étant isolée sur toute sa longueur, dans sa partie (18a), à l'exception de sa pointe inférieure (18b) et de sa partie supérieure, dans la zone destinée à raccorder l'aiguille au reste du circuit, un écran isolant (19) interposé entre la plaque de protection (17) et le plan dans lequel se trouvent les bandes conductrices (5, 6, 7, 8) cet écran isolant ayant une épaisseur légèrement supérieure à la longueur de la pointe conductrice (18b) de chaque aiguille-contact (18), un transformateur (21) dont l'enroulement secondaire (21a) est connecté, à ses extrémités, respectivement aux deux ensembles de bandes conductrices (5,6) ayant des polarités inverses, cet enroulement secondaire (21a) étant également relié à un ensemble détecteur (22) comprenant un pont redresseur (23) suivi d'un condensateur (27) et alimentant, entre ses bornes de sortie à courant continu, un thyristor (24) en série avec la bobine de relais (25) et dont la gâchette est reliée, par une résistance (26) à la plaque de protection (17), ce relais (25) comportant un contact repos (25a) qui est branché en série dans le circuit d'alimentation de l'enroulement primaire (21b) du transformateur (21).

5. Dispositif suivant l'une quelconque des revendications précédentes caractérisé en ce qu'il comporte, pour une application à l'alimentation électrique d'appliques murales et au plafond (28), une structure fixée sur une cloison (29) laquelle comprend un substrat constitué de bandes d'acier doux parallèles (31, 32) isolées entre elles, de bandes conductrices (33, 34) recouvrant les bandes d'acier doux (31, 32), ce substrat étant recouvert d'un revêtement externe de la cloison et chaque applique (28) comporte un socle (39) sur la face postérieure duquel sont montées des aiguilles-contact (A, B) destinées à venir en contact respectivement avec les bandes conductrices (33, 34) pour assurer l'alimentation électrique d'une lampe (41) portée par le socle (39), et la fixation de l'applique (28) est réalisée au moyen d'au moins un aimant (42) porté par le socle (39) et coopérant avec les bandes d'acier doux (31, 32) pour maintenir l'applique (28) plaquée contre la cloison (29).

6. Dispositif suivant la revendication 5 caractérisée en ce que le substrat comporte trois bandes conductrices (33, 34, 43) dont deux d'entre elles à savoir les bandes conductrices (33, 34) sont connectées respectivement aux extrémités de l'enroulement secondaire d'un transformateur abaisseur (44), tandis qu'une extrémité de cet enroulement secondaire est connectée, par l'intermédiaire d'une diode (45), à la troisième bande conductrice (43).

7. Dispositif suivant l'une quelconque des revendications 1 à 6 caractérisé en ce qu'il comporte, pour la distribution de signaux électriques, tels. que courant « son », signal téléphonique ou autre, à divers appareils HI-FI disposés dans une pièce, des bandes conductrices (46, 47, 48, 49) s'étendant tout autour de cette pièce, à proximité immédiate des murs, en étant espacées les unes des autres, deux de ces bandes (46, 47) étant prévues, dans le cas de l'alimentation d'appareils HI-FI, pour assurer la distribution du courant « son » du canal gauche tandis que les deux autres bandes (48, 49) assurent la distribution du courant « son » du canal droit ou réciproquement, ou alternées dans un sens quelconque, et des connecteurs (51, 52) pourvus d'aiguilles-contact (51a, 51b), (52a, 52b) venant respectivement en contact avec les bandes conductrices (46, 47, 48, 49).

8. Dispositif suivant l'une quelconque des revendications précédentes caractérisé en ce que le capteur de courant comporte un interrupteur s'ouvrant immédiatement, lors de l'enlèvement du capteur de sa surface d'appui, afin que la rupture électrique ne se produise pas entre les aiguilles-contact et le substrat conducteur.

9. Dispositif suivant l'une quelconque des revendications précédentes caractérisé en ce que le capteur de courant (2) comprend une bobine de relais (3) branchée en série entre deux aiguilles-contact (A, B), la première aiguille-contact (A) étant reliée à une borne d'entrée de la charge, le relais (53) comporte un contact inverseur (53a) dont le commun est relié à l'autre borne d'entrée de la charge et qui, en position de repos, est connecté à une troisième aiguille-contact (C) et, en position de travail, à la deuxième aiguille-contact (B).

10. Dispositif suivant l'une quelconque des revendications précédentes caractérisé en ce que chaque aiguille-contact (A) est montée effaçable sous le capteur de courant (2) et elle est rappelé en position verticale par un organe élastique (57), chaque aiguille-contact effaçable (A) est solidaire d'une douille (54) à la partie supérieure de laquelle est fixée une anse (55), le capteur de courant (2) est percé d'une ouverture (56) à travers l'anse (55) fait saillie vers le haut, un caoutchouc (57) s'étend en travers de l'ouverture (56) du capteur (2), en étant accroché, à ses extrémités, à des pattes (58) et il s'étend également à travers l'anse (55) pour retenir l'aiguille-contact (A), et une plaque conductrice intercalaire (5) percée, dans sa partie centrale, d'un trou (61) correspondant à l'ouverture (56) du capteur (2), et disposé entre la douille (54) et le capteur (2), cette plaque conductrice intercalaire (59) assurant la liaison électrique avec l'organe de commutation.

## Claims

1. Device for supplying an electric receiver whose position is variable on a surface, comprising, on said surface, a network of parallel strips made of an electrically conducting material, of the same width and spaced apart from one another, these strips being imbricated alternately in one another, forming two assemblies, namely a first assembly of strips of even rows (4, 6, 8) connected to one pole (10) of a source of electrical current, and a second assembly of strips of odd rows (3, 5, 7) connected to the other pole (12) of the source of current, a current pick-up (2) with variable position, three sensors (A, B, C) adapted to come into contact with the conducting strips, and a switching circuit (13) for supplying the receiver, this circuit (13) having a plurality of inputs connected repectively to the current sensors (A, B, C) and an output connected to the receiver to allow supply of the receiver (1) when at least two of the current sensors (A, B, C) come into contact with two conducting strips belonging respectively to the first and second assemblies of strips connected to the two poles (10, 12) of the source of electrical current, characterized in that the network of parallel conducting strips (5-8) is covered with a layer of insulating material (14), the current sensors (A, B, C) are made in the form of metal contact styluses of the same length passing through the layer of insulating material (14) forming the upper covering applied on the conducting strips (5-8) and the sensors (A, B, C) are disposed at the apices of an equilateral triangle, wherein the height of this equilateral triangle is equal to the distance between centres of the conducting strips (5-8) that is to say substantially equal to the wideness of said strips.

2. A device according to claim 1, characterized in that the strips of even rows (4, 6, 8) of the first assembly are connected, at one of their ends, to a common transverse conducting strip (9) itself connected to a pole (10) of the source of electrical current, the strips of odd rows (3, 5, 7) of the second assembly are connected, at one of their ends, to a common transverse conducting strip (11), itself connected to the other pole (12) of the source of electrical current, these strips of even and odd rows stop at a short distance from the common transverse strips (9, 11), one of the end strips (3) may be used, as well as the common transverse strips (9, 11), for making the return towards the source of current (12, 10), of a group of strips (3, 5, 7) and the whole of the surface may be divided into a plurality of independent zones to ensure better distribution of the electrical intensity.

3. A device according to any of the preceding claims, characterized in that the circuit (13) comprises timing means (16) for provoking supply of the receiver (1) a certain time after the current sensors (A, B, C) are brought into contact with the conducting strips (3-8).

4. A device according to any of the preceding claims, characterized in that it comprises an anti-electrocution safety device comprising a protecting plate (17) located beneath the layer of insulating material (14) and which is a good conductor of electricity, this protecting plate being adapted to be traversed by contact styluses (18), each of these contact styluses (18) being insulated over the whole of its length, in its general (18a), except for its lower tip (18b) and its upper part, in the zone adapted to connect the stylus to the rest of the circuit, an insulating screen (19) interposed between the protecting plate (17) and the plane in which the conducting strips (5, 6, 7, 8) lie, this insulating screen having a thickness lightly greater than the length of the conducting tip (18b) of each contact stylus (18), a transformer (21) whose secondary winding (21a) is connected at its ends respectively to the two assemblies of conducting strips (5, 6) having opposite polarities, this secondary winding (21a) also being connected to a detector assembly (22) comprising a rectifier bridge (23) followed by a capacitor (27) and supplying, between it D.C. output terminals, a thyristor (24) in series with the relay coil (25) and whose gate is connected, by a resistor (26), to the protecting plate (17), this relay (25) comprising a normally closed contact (25a) which is connected in the supply circuit of the primary winding (21b) of the transformer (21).

5. A device according to any of the preceding claims, characterized in that it comprises, for an application to the electrical supply of wall and ceiling lamps (28) a structure fixed on a partition (29) which comprises a substrate constituted by parallel mild steel strips (31, 32), insulated from each other, by conducting strips (33, 34) covering the mild steel strips (31, 32), this substrate being covered with an outer wall covering, and each wall lamp (28) comprises a base (39) on the rear face of which are mounted contact styluses (A, B) adapted to come into contact respectively with the conducting strips (33, 34) in order to ensure electrical supply of a lamp (41) borne by the base (39), and the wall lamp (28) is fixed by means of at least one magnet (42) borne by the base (39) and cooperating with the mild steel strips (31, 32) in order to maintain the wall lamp (28) applied against the partition (29).

6. A device according to claim 5, characterized in that the substrate comprises three conducting strips (33, 34, 35) of which two (33, 34) are respectively connected to the ends of the secondary winding of a step-down transformer (44), whilst one end of this secondary winding is connected, via a diode (45), to the third conducting strip (43).

7. A device according to any of claims 1 to 6, characterized in that it comprises, for the distribution of electrical signals, such as « sound » current, telephonic signal or the like, to diverse Hi-Fi appliances installed in a room, several conducting strips (46, 47, 48, 49) extending all around this room in the immediate vicinity of the walls and being spaced from one another, two of these strips (46, 47) being provided, in the case of supplying Hi-Fi appliances, to ensure distribution of the « sound » current of the left track whilst two other strips (48, 49) ensure distribution of the « sound » current of the right track, or vice versa, or alternately in any direction, and connectors (51, 52) provided with contact styluses (51a, 51b ; 52a, 52b) coming respectively into contact with the conducting strips (46, 47, 48, 49).

8. A device according to any of preceding claims, characterized in that the current pick-up comprises a switch opening immediately, when the pick-up is removed from its support surface, in order to avoid electrical breack occurring between the contact styluses and the conducting substrate.

9. A device according to any of preceding claims, characterized in that the current pick-up (2) comprises a relay coil (3) connected in series between two contact styluses (A, B), a first contact stylus (A) being connected to an input terminal of the load, the relay (53) comprises an inverter contact (53a) of which the common is connected to the other input terminal of the load and which, in rest position, is connected to a third contact stylus (C) and, in working position, the second contact stylus (B).

10. A device according to any of preceding claims, characterized in that each contact stylus (A) is mounted retractably beneath the current pick-up (2) and it is returned into vertical position by an elastic member (57), each retractable contact stylus (A) is fast with a bush (54) in the upper part of which a staple (55) is fixed, the current pick-up (2) is pierced with an opening (56) through which the staple (55) projects upwardly, a rubber band (55) extends across the opening (56) of the pick-up (2), being hooked thereto, at its end, by hooks (58), and it also extends through the staple (55), in order to retain the contact stylus (A), and an interposed conducting plate (59) pierced, in its central part, with a hole (61) corresponding to the opening (56) of the pick-up (2), and disposed between the bush (54) and the pick-up (2), this interposed conducting plate (59) ensuring electrical connection with the switching member.

**Patentansprüche**

1. Stromeinspeisungsanordnung für einen auf einer Oberfläche ortsveränderlichen elektrischen Empfänger, die auf dieser Oberfläche ein Gitter von mit Abstand voneinander angeordneten Streifen gleicher Breite aufweist, wobei diese Streifen abwechselnd derart verschachtelt sind, daß die einen und die anderen zwei Gruppen bilden, von denen die erste Streifengruppe mit gerader Reihennummer (4, 6, 8) mit einem Pol (10) einer elektrischen Stromquelle und die zweite Streifengruppe mit ungerader Reihennummer (3, 5, 7) mit dem anderen Pol (12) der Stromquelle verbunden ist, sowie einen Stromaufnehmer (2) mit veränderbarer Position, drei Fühler (A, B, C), welche geeignet sind, mit den leitenden Streifen in Kontakt zu kommen, und einen Schaltkreis (13) zur Speisung des Empfängers, wobei dieser Schaltkreis (13) mehrere Eingänge aufweist, die jeweils mit den Stromfühlern (A, B, C) verbunden sind, und einen mit dem Empfänger verbundenen Ausgang, der die Speisung des Empfängers ermöglicht, wenn wenigstens zwei der Stromfühler (A, B, C) mit zwei leitenden Streifen in Kontakt kommen, die zur ersten bzw. zweiten Gruppe gehören, die jeweils mit einem der beiden Pole (10, 12) der elektrischen Stromquelle verbunden sind, dadurch gekennzeichnet, daß dieses Gitter aus parallelen Leiterstreifen (5-8) von einer Isoliermaterialschicht (14) abgedeckt wird, daß die Stromfühler (A, B, C) in Form von metallischen Kontaktnadeln gleicher Länge augebildet sind, die die Schicht aus Isoliermaterial (14) durchquert, die auf die Leiterstreifen (5-8) als obere Abdeckung aufgebracht ist, und daß die Fühler (A, B, C) an den Ecken eines gleichseitigen Dreiecks angebracht sind, dessen Höhe gleich dem Abstand zwischen den Mittelachsen der Streifen (5-8) ist, d. h. im wesentlichen gleich der Breite dieser Streifen.

2. Anordnung nach Anspruch 1, dadurch gekennzeichnet, daß die Streifen mit gerader Reihennummer (4, 6, 8) der ersten Gruppe mit einem ihrer Enden an einem gemeinsamen, leitenden Querstreifen (9) angeschlossen sind, der seinerseits mit einem Pol (10) der elektrischen Stromquelle verbunden ist, während die Streifen mit ungerader Reihennummer (3, 5, 7) der zweiten Gruppe mit einem ihrer Enden an einen gemeinsamen, leitenden Querstreifen (11) angeschlossen sind, der seinerseits mit dem anderen Pol (12) der elektrischen Stromquelle verbunden ist, und daß diese Streifen mit gerader und ungerader Reihennummer mit kurzem Abstand vor diesen gemeinsamen Querstreifen (9, 11) enden und einer der äußeren Streifen (3) ebenso wie die gemeinsamen Querstreifen (9, 11) benutzt werden kann, um die Rückleitung zu der Stromquelle (12, 10) zu bilden, und daß eine Gruppe von Streifen 3, 5, 7) und die gesamte Oberfläche in mehrere unabhängige Zonen unterteilt ist, um eine bessere Verteilung der elektrischen Stromstärke zu erreichen.

3. Anordnung nach einem der vorhergehenden Ansprüche, dadurch gekennzeichnet, daß der Kreis (13) Verzögerungsmittel (16) umfaßt, um die Versorgung des Empfängers (1) eine gewisse Zeit nach der Kontaktherstellung zwischen den Stromfühlern (A, B, C) und den Leiterstreifen (3-8) zu erreichen.

4. Anordnung nach einem der vorhergehenden Ansprüche, dadurch gekennzeichnet, daß sie eine Sicherungseinrichtung gegen Stromschlag enthält, die eine Schutzplatte (17) umfaßt, die unter der Isoliermaterialschicht (14) angeordnet ist und die ein guter elektrischer Leiter ist, daß diese Schutzplatte bestimmt ist, von den Kontaktnadeln (18) durchquert zu werden, wobei jede der Kontaktnadeln über ihren gesamten Längsabschnitt (18a) mit Ausnahme ihrer unteren Spitze (18b) und ihres oberen Abschnitts, in der zur Verbindung mit dem Rest des Kreises bestimmten Zone, isoliert sind, daß ein Isolierschirm (19) zwischen der Schutzplatte (17) und der Ebene angeordnet ist, in der sich die Leiterstreifen (5, 6, 7, 8) befinden, wobei dieser Isolierschirm eine Dicke besitzt, die etwas oberhalb der Länge der leitenden Spitze (18b) jeder Kontaktnadel (18) liegt, sowie einen Transformator (21), dessen Sekundärwicklung (21a) mit ihren Enden mit zwei Leiterstreifen (5, 6) mit unterschiedlicher Polarität verbunden ist, wobei diese Sekundärwicklung (21a) zugleich mit einer Detektoranordnung (22) verbunden ist, die eine Gleichrichterbrücke (23) umfaßt, gefolgt von einem Kondensator (27) und die zwischen ihren Gleichstromanschlüssen einen in Reihe mit der Relaisspule (25) angeordneten Thyristor (24) speist, dessen Steuerelektrode über einen Widerstand (26) mit der Schutzplatte (17) verbunden ist, wobei dieses Relais (25) einen Ruhekontakt (25a) umfaßt, der in Serie mit dem Speisekreis der Primärspule (21b) des Transformators (21) geschaltet ist.

5. Anordnung nach einem der vorhergehenden Ansprüche, dadurch gekennzeichnet, daß sie für die Anwendung bei der elektrischen Versorgung von Wandund Deckenleuchten (28) eine auf einer Trennwand (29) befestigte Konstruktion umfaßt, die ihrerseits eine aus voneinander isolierten Flußstahlstreifen (31, 32) und die Flußstahlstreifen (31, 32) überdeckenden Leiterstreifen (33, 34) gebildete Unterlage umfaßt, die von einer äußeren Wandabdeckung bedeckt ist, daß jede Wandleuchte (28) einen Sockel (39) umfaßt, auf dessen Rückseite Kontaktnadeln (A, B) angebracht sind, die dazu bestimmt sind, in Kontakt mit dem einen bzw. anderen der Leiterstreifen (33, 34) zu gelangen, um die elektrische Versorgung einer vom Sockel (39) getragenen Lampe (41) sicherzustellen, wobei die Befestigung der Leuchte (28) mittels wenigstens eines vom Sockel (39) getragenen Magneten (42) sichergestellt ist, der mit den Flußstahlstreifen (31, 32) zusammenwirkt, um die Leuchte (28) in Anlage an der Zwiwchenwand (29) zu halten.

6. Anordnung nach Anspruch 5, dadurch gekennzeichnet, daß die Unterlage drei Leiterstreifen (33, 34, 43) umfaßt, von denen zwei (33, 34) mit den Enden der Sekundärwicklung eines spannungserniedrigenden Transformators (44) verbunden sind, während ein Ende dieser Sekundärspule über eine Diode (45) mit dem dritten Leiterstreifen (43) verbunden ist.

7. Anordnung nach einem der Ansprüche 1 bis 6, dadurch gekennzeichnet, daß sie zur Verteilung elektrischer Signale, wie z. B. « Ton »-Strom, telefonischen Signalen und anderen, an verschieden in einem Raum angeordnete HI-FI-Apparate Leiterstreifen (46, 47, 48, 49) umfaßt, die sich in unmittelbarer Nähe der Mauern um den ganzen Raum erstrecken und einen Abstand voneinander aufweisen, wobei zwei der Streifen (46, 47) im Falle der Versorgung von HI-FI-Apparaten zur Sicherung der Verteilung der « Ton »-Stroms des linken Kanals vorgesehen sind, während die beiden anderen Streifen (48, 49) die Verteilung des « Ton »-Stroms des rechten Kanals sicherstellen, oder umgekehrt, und daß mit Kontaktnadeln (51a, 51b ; 52a, 52b) versehene Anschlußelemente (51, 52) in entsprechender Weise mit den Leiterstreifen (46, 47, 48, 49) in Kontakt gelangen.

8. Anordnung nach einem der vorhergehenden Ansprüche, dadurch gekennzeichnet, daß der Stromaufnehmer einen Ausschalter umfaßt, der sich sofort öffnet, wenn der Stromaufnehmer von seiner Auflagefläche abgehoben wird, damit kein elektrischer Durchschlag zwischen den Kontaktnadeln und der leitenden Unterlage stattfindet.

9. Anordnung nach einem der vorhergehenden Ansprüche, dadurch gekennzeichnet, daß der Stromaufnehmer (2) eine Relaisspule (3) umfaßt, die in Reihe zwischen zwei Kontaktnadeln (A, B) geschaltet ist, wobei die erste Kontaktnadel (A) mit einer Lasteingangsklemme verbunden ist und das Relais (53) einen Wechselschalter (53a) umfaßt, dessen gemeinsamer Anschluß mit der anderen Lasteingangsklemme verbunden ist und der in Ruhestellung mit einer dritten Kontaktnadel und in Betriebsstellung mit der zweiten Kontaktnadel (B) verbunden ist.

10. Anordnung nach einem der vorhergehenden Ansprüche, dadurch gekennzeichnet, daß jede Kontaktnadel (A) absenkbar unter dem Stromaufnehmer (2) angebracht ist und sie durch eine elastisches Organ (57) in ihre vertikale Lage zurückgestellt wird, daß jede absenkbare Kontaktnadel (A) fest mit einer Hülse (54) verbunden ist, in deren oberen Abschnitt eine öse (55) befestigt ist, daß der Stromaufnehmer (2) von einer öffnung (56) durchbrochen wird, durch welche die öse (55) nach oben vorspringt, daß sich ein Gummi (57) quer über die öffnung (56) des Stromaufnehmers (2) erstreckt und mit seinen Enden an Haken (58) verankert ist und sich durch die öse (55) erstreckt, um die Kontaktnadel (A) zurückzuhalten, und daß eine dazwischengeschobene Leiterplatte (59), die in ihrer Mitte von einem der öffnung (56) im Stromaufnehmer (2) entsprechenden Loch (61) durchbrochen wird und zwischen der Hülse (54) und dem Stromaufnehmer (2) angeordnet ist, die elektrische Verbindung mit dem Schaltorgan sicherstellt.

Fig. 1

0 116 505

0 116 505

**Fig.2**

**Fig.3**

**Fig.4**

0 116 505

**Fig. 5**

**Fig. 7**

3

# Fig:6

0 116 505

Fig: 8

51 51a 51b 46 47 48 52 49

52a 52b

5    6    7    8

Fig: 8A

51a 51b 52a

46

47

48

49

51

52b 52

Fig: 9

5c 6a

5b

5a

6b

6c

5

*Fig.10*

*Fig.11*